# EUROPEAN PATENT APPLICATION

(11) **EP 4 525 266 A1**
(43) Date of publication of application: **19.03.2025**
(21) Application number: 24175085.0
(22) Date of filing: 09.05.2024
(51) Int. Cl.: H02J 9/00

(54) **SWITCHLESS UNINTERRUPTED POWER SUPPLY**

(30) Priority: 12.09.2023 CN 202322477803 U
(71) Applicant: Vertiv Corporation, Columbus, OH 43330 (US)
(72) Inventor: GAO, Cheng, Guangdong, 518055 (CN); LIN, Chun, Guangdong, 518055 (CN)
(74) Representative: Morrall, Jonathan Ian McLachlan

(57) **Abstract**

The present disclosure discloses a switchless uninterrupted power supply, which includes a cabinet, a wiring assembly, a monitor module, a by-pass module, and a power module. The wiring assembly, the monitor module, the by-pass module and the power module are arranged vertically in the cabinet. A power wire opening is formed on a top of the cabinet. The wiring assembly is arranged at the power wire opening. The switchless uninterrupted power supply has a compact layout and great power density, and is adaptable to various power distribution scenarios. The wiring assembly is directly connected in use, and time spent on assembly is reduced greatly.

## Description

### FIELD

The present disclosure relates to the field of uninterrupted power supplies, and in particular to a switchless uninterrupted power supply.

### BACKGROUND

Specific customers are demanding an uninterrupted power supply (UPS) with a particular layout in the market, to adapt to the requirements of various power systems. With the development of technology, a power density of the uninterrupted power supply is increasing, and requirement for reliability of products is higher. Therefore, it is necessary to provide a switchless uninterrupted power supply to increase the reliability of products maximally through an innovative layout while meeting the requirement for a great power density.

### SUMMARY

A technical problem to be solved in the present disclosure is to provide a switchless uninterrupted power supply in a flexible configuration. The switchless uninterrupted power supply can be conveniently and quickly configured for various application scenarios according to on-site customer demands.

To solve the technical problem above, the following technical solutions are provided in the present disclosure.

A switchless uninterrupted power supply includes a cabinet, and a wiring assembly, a monitor module, a by-pass module, and a power module arranged in the cabinet. The wiring assembly, the monitor module, the by-pass module and the power module are arranged vertically. A power wire opening is formed on a top of the cabinet. The wiring assembly is arranged at the power wire opening.

Further, the wiring assembly includes a main copper bar assembly, a by-pass copper bar assembly, an output copper bar assembly and a ground copper bar. The by-pass copper bar assembly is arranged at a front half portion in a depth direction of the cabinet. The main copper bar assembly, the output copper bar assembly and the ground copper bar are arranged at a back half portion in the depth direction of the cabinet.

Further, the main copper bar assembly and the output copper bar assembly are arranged oppositely in a width direction of the cabinet.

Further, the ground copper bar is arranged behind the main copper bar assembly and the output copper bar assembly in the depth direction of the cabinet.

Further, the wiring assembly includes a battery wiring assembly. The battery wiring assembly and the by-pass copper bar assembly are arranged in parallel in the width direction of the cabinet, and are arranged at the front half portion of the cabinet. The battery wiring assembly and the main copper bar assembly are arranged in parallel along the depth direction of the cabinet.

Further, the battery wiring assembly includes an anode wiring copper bar and a cathode wiring copper bar. Each of the anode wiring copper bar and the cathode wiring copper bar includes two parts connected together. First parts of the anode wiring copper bar and the cathode wiring copper bar extend along the depth direction of the cabinet. Second parts of the anode wiring copper bar and the cathode wiring copper bar extend from the top of the cabinet to a bottom of the cabinet.

Further, the wiring assembly includes a neutral wire copper bar. The neutral wire copper bar and the output copper bar assembly are arranged in parallel along the depth direction of the cabinet. The neutral wire copper bar extends along a height direction of the cabinet.

Further, each of the main copper bar assembly and the output copper bar assembly includes two parts connected together. First parts of the main copper bar assembly and the output copper bar assembly extend along the width direction of the cabinet. Second parts of the main copper bar assembly and the output copper bar assembly extend from the top of the cabinet to the bottom of the cabinet.

Further, an input terminal of the by-pass module is connected to the by-pass copper bar assembly arranged on a top of the by-pass module. An output terminal of the by-pass module is connected to the second part of the output copper bar assembly arranged at a rear portion of a side of behind the by-pass module.

Further, the main copper bar assembly includes a first main copper bar, a second main copper bar and a third main copper bar. The first main copper bar, the second main copper bar and the third main copper bar are arranged in parallel along the depth direction of the cabinet.

Further, the output copper bar assembly includes a first output copper bar, a second output copper bar and a third output copper bar. The first output copper bar, the second output copper bar and the third output copper bar are arranged in parallel along the depth direction of the cabinet.

Further, the by-pass copper bar assembly includes a first by-pass copper bar, a second by-pass copper bar and a third by-pass copper bar. The first by-pass copper bar, the second by-pass copper bar and the third by-pass copper bar are arranged in parallel along the width direction of the cabinet.

The beneficial effects of the present disclosure are as follows.

The switchless uninterrupted power supply has a compact layout and a great power density, and is adaptable to various power distribution scenarios. The wiring assembly is directly connected in use, and time spent on assembly is reduced greatly.

### BRIEF DESCRIPTION OF THE DRAWINGS

Figure 1 is a schematic perspective view showing a switchless uninterrupted power supply according to an embodiment of the present disclosure;
Figure 2 is a top view of the switchless uninterrupted power supply after an incoming wire strip board is detached according to an embodiment of the present disclosure;
Figure 3 is a schematic perspective view showing the switchless uninterrupted power supply after the incoming wire strip board is detached according to an embodiment of the present disclosure;
Figure 4 is a left front view of the switchless uninterrupted power supply according to an embodiment of the present disclosure;
Figure 5 is a right view of the switchless uninterrupted power supply according to an embodiment of the present disclosure;
Figure 6 is a schematic diagram showing an input terminal of a by-pass module according to an embodiment of the present disclosure; and
Figure 7 is a schematic diagram showing an output terminal of a by-pass module according to an embodiment of the present disclosure.

Reference symbols include:

| | | | | | |
|---|---|---|---|---|---|
| 100 | cabinet, | 110 | power wire opening, | 120 | control wire opening, |
| 130 | internal cover plate and viewing window, | | | 140 | incoming wire strip board, |
| 150 | slide rail, | 200 | monitor module, | 300 | by-pass module, |
| 400 | power module, | 500 | wiring assembly, | m | main copper bar assembly |
| mA | first main copper bar, | | | mB | second main copper bar, |
| mC | third main copper bar, | | | b | by-pass copper bar assembly, |
| bA | first by-pass copper bar, | | | bB | second by-pass copper bar, |
| bC | third by-pass copper bar, | | | o | output copper bar assembly, |
| oA | first output copper bar, | | | oB | second output copper bar, |
| oC | third output copper bar, | | | N | neutral wire copper bar, |
| PE | ground copper bar, | | | 520 | battery wiring assembly, |
| 521 | anode wiring copper bar, | | | 522 | cathode wiring copper bar. |

### DETAILED DESCRIPTION

In order to clarify the technical problem to be solved, technical solutions, and beneficial effects of the present disclosure, hereinafter the present disclosure is described in further detail in conjunction with the drawings and embodiments. It should be understood that specific embodiments described herein are only used to illustrate the present disclosure, rather than limit the present disclosure.

It should be noted that, an element, when described as being "fixed" or "arranged" on another element, may be arranged on the other element directly or indirectly. An element, when described as being "connected" to another element may be connected to the other element directly or indirectly.

It should be understood that, orientations or positional relationships indicated by the terms such as "length", "width" "upper", "lower", "front", "back", "left", "right", "vertical", "horizontal", "top", "bottom", "inner", "outer" and the like are based on the orientations or positional relationships shown in the drawings. These terms are only used to facilitate the description of the present disclosure and to simplify the description, rather than indicate or imply that a device or element referred to must have a specific orientation or be arranged and operated in a specific orientation. Therefore, these terms should not be construed as a limitation to the present disclosure.

Furthermore, the terms "first" and "second" are merely used for purpose of description, and should not be construed as indicating or implying relative importance or implying the number of the indicated technical features. Therefore, a feature defined by "first" and "second" may explicitly or implicitly be one or more in number. In the description of the present disclosure, "multiple" indicates two or more, unless specifically defined otherwise.

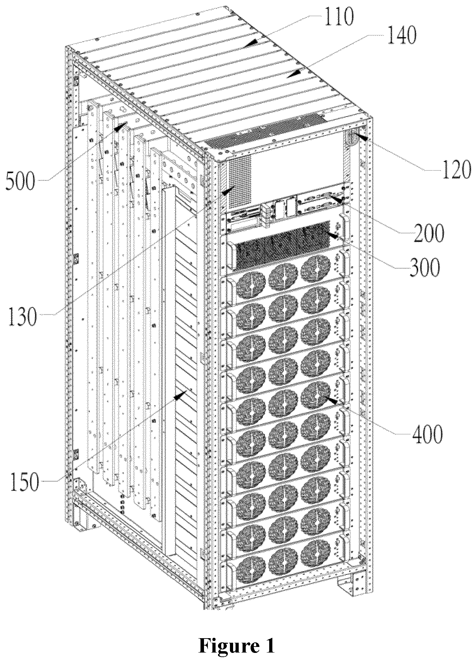

Reference is made to Figure 1, which shows a preferred embodiment of the present disclosure. The switchless uninterrupted power supply includes a cabinet 100, and a wiring assembly 500, a monitor module 200, a by-pass module 300, and a power module 400 arranged in the cabinet 100. The wiring assembly 500, the monitor module 200, the by-pass module 300 and the power module 400 are arranged vertically. A power wire opening 110 is formed on the top of the cabinet 100. The wiring assembly 500 is arranged at the power wire opening 110. Such a arrangement has a compact layout, provides a great power density, and is adaptable to various power distribution scenarios. The wiring assembly 500 is directly connected in use, and time spent on assembly is reduced greatly. Each of the above components is introduced in further detail below.

As shown in Figure 1, the cabinet 100 is roughly a rectangular box as a whole. The monitor module 200, the by-pass module 300, the power module 400, the wiring assembly 500 and the like are arranged inside the cabinet 100. The wiring assembly 500, the monitor module 200, the by-pass module 300 and the power module 400 are arranged along a height direction of the cabinet 100. Multiple slide rails 150 are arranged on a side wall of the cabinet 100 near the front of the cabinet 100. The monitor module 200, the by-pass module 300 and the power module 400 are mounted on the slide rails 150 in a pullable manner. There are multiple power modules 400. The multiple power modules 400 are stacked along the height direction of the cabinet 100. The number of the power module 400 is not limited in the present disclosure, and the number of the power module 400 may be increased or decreased, depending on actual situations.

The power wire opening 110 is formed at the top of the cabinet 100. A detachable incoming wire strip board 140 is arranged at the power wire opening 110. The wiring assembly 500 is arranged below the incoming wire strip board 140. The wiring assembly 500 is exposed after the incoming wire strip board 140 is detached, thereby facilitating wiring. An internal cover plate and viewing window 130 and a control wire opening 120 are arranged at an upper part of a front face of the cabinet 100. The internal cover plate and viewing window 130 and the control wire opening 120 are arranged corresponding to a height of the wiring assembly 500. The internal cover plate and viewing window 130 and the control wire opening 120 are arranged along the depth direction of the cabinet 100 with the wiring assembly 500.

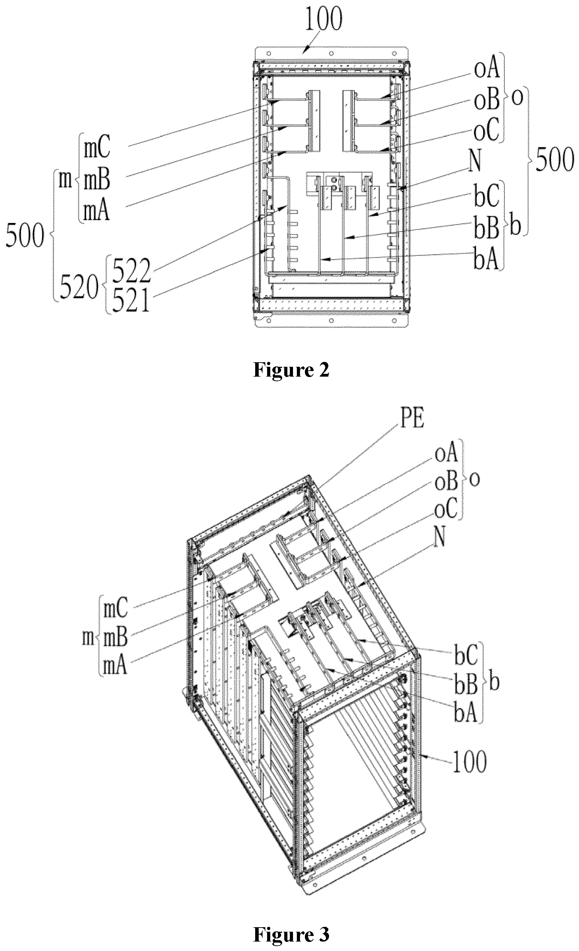

As shown in Figure 2 and Figure 3, in one of the embodiments of the present disclosure, the wiring assembly 500 includes a main copper bar assembly m, a by-pass copper bar assembly b, an output copper bar assembly o, a neutral wire bar N, a ground copper bar PE, and a battery wiring assembly 520. The by-pass copper bar assembly b and the battery wiring assembly 520 are arranged at a front half portion in the depth direction of the cabinet 100. The main copper bar assembly m, the output copper bar assembly o, the neutral wire copper bar N and the ground copper bar PE are arranged at a back half portion in the depth direction of the cabinet 100.

Specifically, the main copper bar assembly m and the output copper bar assembly o are arranged oppositely in a width direction of the cabinet 100. Each of the main copper bar assembly m and the output copper bar assembly o has a shape of "7" as a whole, and includes two parts connected together. First parts of the main copper bar assembly m and the output copper bar assembly o extend along the width direction of the cabinet 100. Second parts of the main copper bar assembly m and the output copper bar assembly o extend from the top of the cabinet 100 to the bottom of the cabinet 100.

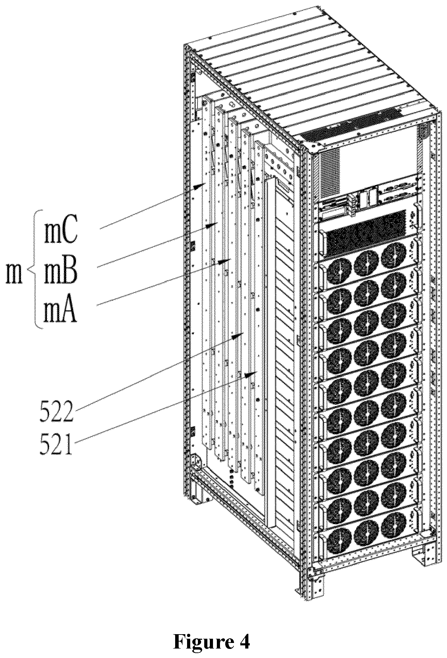

Specifically, as shown in Figure 2, Figure 3 and Figure 4, the main copper bar assembly m includes a first main copper bar mA, a second main copper bar mB and a third main copper bar mC. The first main copper bar mA, the second main copper bar mB and the third main copper bar mC are arranged in parallel along the depth direction of the cabinet 100. As mentioned before, each of the first main copper bar mA, the second main copper bar mB and the third main copper bar mC has a shape of "7", and includes two parts connected together. That is, first parts of the first main copper bar mA, the second main copper bar mB and the third main copper bar mC extend along the width direction of the cabinet 100, and second parts of the first main copper bar mA, the second main copper bar mB and the third main copper bar mC extend from the top of the cabinet 100 to the bottom of the cabinet 100.

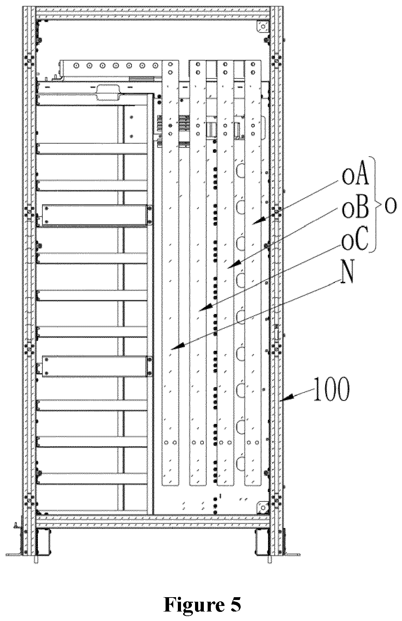

As shown in Figure 2, Figure 3 and Figure 5, the output copper bar assembly o includes a first output copper bar oA, a second output copper bar oB and a third output copper bar oC. The first output copper bar oA, the second output copper bar oB and the third output copper bar oC are arranged in parallel along the depth direction of the cabinet 100. As mentioned before, each of the first output copper bar oA, the second output copper bar oB and the third output copper bar oC has a shape of "7", and includes two parts connected together. That is, first parts of the first output copper bar oA, the second output copper bar oB and the third output copper bar oC extend along the width direction of the cabinet 100, and second parts of the first output copper bar oA, the second output copper bar oB and the third output copper bar oC extend from the top of the cabinet 100 to the bottom of the cabinet 100.

As shown in Figure 2, Figure 3 and Figure 5, the neutral wire copper bar N and the output copper bar assembly o are arranged in parallel along the depth direction of the cabinet 100. The neutral wire copper bar N extends along the height direction of the cabinet 100. That is, the neutral wire copper bar N is arranged in parallel with the second parts of the first output copperbar oA, the second output copper bar oB and the third output copper bar oC. Furthermore, the neutral wire copper bar N is closer to the by-pass copper bar assembly b than the second parts of the first output copper bar oA, the second output copper bar oB and the third output copper bar oC.

As shown in Figure 2 and Figure 3, the by-pass copper bar assembly b includes a first by-pass copper bar bA, a second by-pass copper bar bB and a third by-pass copper bar bC. The first by-pass copper bar bA, the second by-pass copper bar bB and the third by-pass copper bar bC are arranged in parallel along the width direction of the cabinet 100. Each of the first by-pass copper bar bA, the second by-pass copper bar bB and the third by-pass copper bar bC has a shape of "-", and extends along the depth direction of the cabinet 100.

The ground copper bar PE is arranged behind the main copper bar assembly m and the output copper bar assembly o in the depth direction of the cabinet 100, and extends along the width direction of the cabinet 100.

The battery wiring assembly 520 and the by-pass copper bar assembly b are arranged in parallel in the width direction of the cabinet 100, and are arranged at a front half portion of the cabinet 100. The battery wiring assembly 520 and the main copper bar assembly m are arranged in parallel along the depth direction of the cabinet 100.

As shown in Figure 2, Figure 3 and Figure 4, the battery wiring assembly 520 includes an anode wiring copper bar 521 and a cathode wiring copper bar 522. The anode wiring copper bar 521 and the cathode wiring copper bar 522 each includes two parts connected together. First parts of the anode wiring copper bar 521 and the cathode wiring copper bar 522 extend along the depth direction of the cabinet 100. Second parts of the anode wiring copper bar 521 and the cathode wiring copper bar 522 extend from the top of the cabinet 100 to the bottom of the cabinet 100.

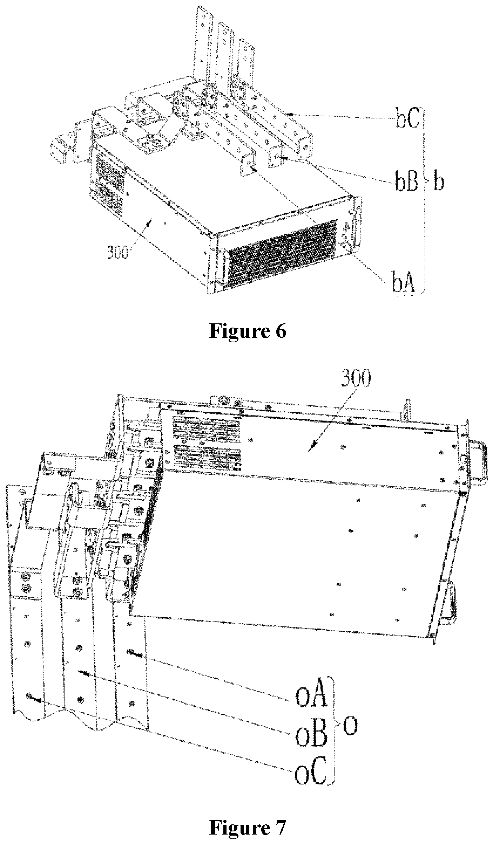

As shown in Figure 6 and Figure 7, an input terminal of the by-pass module 300 is connected to the by-pass copper bar assembly b arranged on the top of the by-pass module 300. An output terminal of the by-pass module 300 is connected to the second part of the output copper bar assembly o arranged at a rear portion of a side of the by-pass module 300. The input and output terminals of the by-pass module 300 each adopts full copper bar carriers, thereby decreasing cost and increasing efficiency of the device.

All the modules and the wiring assembly 500 in the switchless uninterrupted power supply have a proper layout, which is convenient and secure for wiring. The layout of the main copper bar assembly m, the output copper bar assembly o, the by-pass copper bar assembly b, the neutral wire copper bar N, the ground copper bar PE and the battery wiring assembly 520 improves the reliability of the system and the current sharing of the device.

Only preferred embodiments of the present disclosure are described above. Those have ordinary skills in the art can make various modifications to implementation manners and applications based on the idea of the present disclosure. All modifications that do not depart from the concept of the present disclosure fall into the scope of protection of the present disclosure.

## Claims

1. A switchless uninterrupted power supply, **characterized by** comprising:
a cabinet (100);
a wiring assembly (500);
a monitor module (200);
a by-pass module (300); and
a power module (400),
wherein the wiring assembly (500), the monitor module (200), the by-pass module (300) and the power module (400) are arranged vertically in the cabinet (100), a power wire opening (110) is formed on a top of the cabinet (100), and the wiring assembly (500) is arranged at the power wire opening (110).

2. The switchless uninterrupted power supply according to claim 1, **characterized in that**, the wiring assembly (500) comprises:
a main copper bar assembly (m);
a by-pass copper bar assembly (b);
an output copper bar assembly (o); and
a ground copper bar (PE),
wherein the by-pass copper bar assembly (b) is arranged at a front half portion in a depth direction of the cabinet (100); and
the main copper bar assembly (m), the output copper bar assembly (o) and the ground copper bar (PE) are arranged at a back half portion in the depth direction of the cabinet (100).

3. The switchless uninterrupted power supply according to claim 2, **characterized in that**, the main copper bar assembly (m) and the output copper bar assembly (o) are arranged oppositely in a width direction of the cabinet (100).

4. The switchless uninterrupted power supply according to claim 3, **characterized in that**, the ground copper bar (PE) is arranged behind the main copper bar assembly (m) and the output copper bar assembly (o) in the depth direction of the cabinet (100).

5. The switchless uninterrupted power supply according to claim 4, **characterized in that**, the wiring assembly (500) further comprises a battery wiring assembly (520), the battery wiring assembly (520) and the by-pass copper bar assembly (b) are arranged in parallel in the width direction of the cabinet (100), and are arranged at the front half portion of the cabinet (100), and
the battery wiring assembly (520) and the main copper bar assembly (m) are arranged in parallel along the depth direction of the cabinet (100).

6. The switchless uninterrupted power supply according to claim 5, **characterized in that**, the battery wiring assembly (520) comprises an anode wiring copper bar (521) and a cathode wiring copper bar (522), each of the anode wiring copper bar (521) and the cathode wiring copper bar (522) comprises two parts connected together, first parts of the anode wiring copper bar (521) and the cathode wiring copper bar (522) extend along the depth direction of the cabinet (100), and second parts of the anode wiring copper bar (521) and the cathode wiring copper bar (522) extend from the top of the cabinet (100) to a bottom of the cabinet (100).

7. The switchless uninterrupted power supply according to claim 5, **characterized in that** the wiring assembly (500) further comprises a neutral wire copper bar (N), the neutral wire copper bar (N) and the output copper bar assembly (o) are arranged in parallel along the depth direction of the cabinet (100), and the neutral wire copper bar (N) extends along a height direction of the cabinet (100).

8. The switchless uninterrupted power supply according to any one of claims 2 to 7, **characterized in that**, each of the main copper bar assembly (m) and the output copper bar assembly (o) comprises two parts connected together, first parts of the main copper bar assembly (m) and the output copper bar assembly (o) extend along a width direction of the cabinet (100), and second parts of the main copper bar assembly (m) and the output copper bar assembly (o) extend from the top of the cabinet (100) to a bottom of the cabinet (100).

9. The switchless uninterrupted power supply according to claim 8, **characterized in that**, an input terminal of the by-pass module (300) is connected to the by-pass copper bar assembly (b) arranged on a top of the by-pass module (300), and an output terminal of the by-pass module (300) is connected to the second part of the output copper bar assembly (o) arranged at a rear portion of a side of the by-pass module (300).

10. The switchless uninterrupted power supply according to claim 8, **characterized in that**, the main copper bar assembly (m) comprises a first main copper bar (mA), a second main copper bar (mB) and a third main copper bar (mC), and the first main copper bar (mA), the second main copper bar (mB) and the third main copper bar (mC) are arranged in parallel along the depth direction of the cabinet (100).

11. The switchless uninterrupted power supply according to claim 8, **characterized in that**, the output copper bar assembly (o) comprises a first output copper bar (oA), a second output copper bar (oB) and a third output copper bar (oC), and the first output copper bar (oA), the second output copper bar (oB) and the third output copper bar (oC) are arranged in parallel along the depth direction of the cabinet (100).

12. The switchless uninterrupted power supply according to any one of claims 9 to 11, **characterized in that**, the by-pass copper bar assembly (b) comprises a first by-pass copper bar (bA), a second by-pass copper bar (bB) and a third by-pass copper bar (bC), and the first by-pass copper bar (bA), the second by-pass copper bar (bB) and the third by-pass copper bar (bC) are arranged in parallel along the width direction of the cabinet (100).
